# EUROPEAN PATENT APPLICATION

(11) **EP 1 808 213 A1**
(43) Date of publication of application: **18.07.2007**
(21) Application number: 06124727.6
(22) Date of filing: 24.11.2006
(51) Int. Cl.: A63F 13/12

(54) **Network sports system**

(30) Priority: 12.01.2006 CN 200610023273
(71) Applicant: Nineyou Information Technology (Shanghai) Co., Ltd, 200001 Shanghai (CN)
(72) Inventor: Takeshi, Oji, Shanghai 200001 (CN)
(74) Representative: Bohnenberger, Johannes

(57) **Abstract**

This invention relates to an internet entertainment system, more particularly a leisure network sports games system, on which multiplayer may play online, comprising network sports servers, several user terminals connected with the server via the internet, and network sports rug linked to each terminal. The user terminal transforms signals from the sports rug into computer signals, and transmits them to the sports server, and then it could score the single or multiplayer taking part in the game according to their performance, and send the results to every player that would achieve the interactive entertainment effect.

## Description

### Field of the Invention

This invention relates to an internet entertainment system, more particularly, a network sports system.

### Background of the Invention

A dancing rug is a game device integrated with some functions, such as gym, relaxation and entertainment, etc. The user may connect the dancing rug with a computer, and then he could dance on the rug according to the hint signals shown on the screen. The computer will score the player according to the status of stepping on the right place, so the players may exercise when they are playing.

The traditional dancing rug, connected to a computer by serial or parallel port, receives the player's step signals through a switch circuit of the surface contact. When a game starts, the player steps on the corresponding contact switch, simulates dancing movements according to the hints of computer program, then the program will score the player's dancing movements. However, the monotony of this kind of dancing rug cannot meet the requirements of current players because only two players at most can play on traditional dancing rug simultaneously, and it is operated only on the same game device, so it's impossible to achieve participation of multiplayer playing the same game from different computer terminals and interactivities between multiplayer either, for example, chatting or matching and so on.

Along with current popular internet entertainments and technologic development, an interactive online game system is needed for people in different areas to access the internet at any time, and play interactive games from different computers via the internet.

### Summary of the Invention

The present invention aims to provide an internet entertainment system, more particularly, an online network sports system on which every game player may achieve interactivity via the internet, more specifically, a multiplayer online relaxation network sports game system.

To achieve this purpose, said network sports system comprises network sports servers, several user terminals connected with the server via internet, and the network sports rug linked to each terminal. Said network sports system game server comprises: a system logic module managing sporting status of each terminal, a system management module distributing network resource. Said user terminal comprises: a communication module proceeding the communication between the user's terminal and the network sports game servers, a sports rug signal processing module collecting signals from the sports rug and transforming them into various logic signals, an interface drawing module loading interactive data between users and machine from interface library, designing interface, and displaying them on the user terminal, a logic control unit processing the data between the communication module, the sports rug signal processing module and the interface drawing module so as to control the game status, a game database module saving game data.

Said network sports system game server also comprises: a system patch module, which checks current version of the game in users' terminals and provides download of all the updated files; a system gateway module, which receives connection requests and operation commands from users' terminals and transmits them to the game server for processing.

Said game management module, the game database module, the system patch module and the system gateway module are respectively installed in different network sports game servers.

Said user's terminal further comprises: a character movement processing module, which loads movement data from character movement library according to users' performance and displays them on the terminal interface; a music processing module, which loads music selected by the users from music library and plays them for the users; a notes processing module, which loads notes from the notes library according to the selected music, displays them on the terminal interface, and evaluates each player's performance by comparing with the logic step signals received from the sports rug signal processing module.

Said network sports rug connects to the user's terminal by an USB port.

Said network sports rug is a network dancing rug.

Said network sports rug is a network running rug.

Said network sports system also comprises: a chat system, a bulletin system, a channel system, a room management module, and an item management module.

### Brief Description of the Drawings

Fig.1 is a schematic diagram of connection structure of an embodiment of the network sports system according to the present invention;
Fig.2 is a schematic diagram of server connection structure of another embodiment of the network sports system according to the present invention;
Fig.3 is a schematic diagram of user terminal module structure of the network sports system according to the present invention;
Fig.4 is a schematic diagram of network sports rug for the network sports system according to the present invention;
Fig.5 is a schematic diagram of data signal for the network sports system according to the present invention.

### Detailed Description of the Illustrative Embodiments

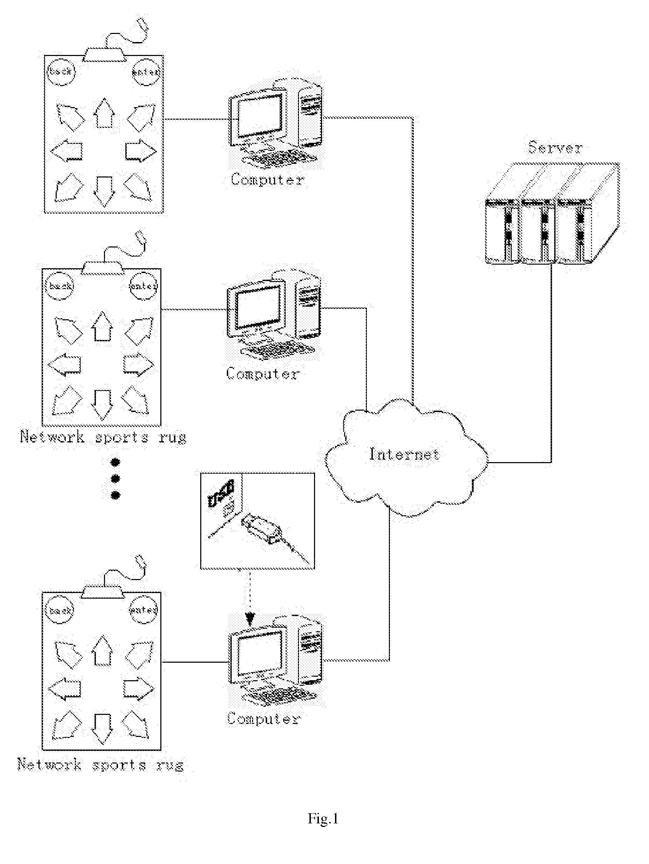

As shown in Figure 1, in one embodiment of this invention, the network sports system comprises a network game server, many user terminals, i.e. PCs connected to the network server, and the network sports rug linked to each user's terminal. When the game starts, the sports rug transmits the signals processed by control IC from the user's step movements to its computer. The computer will transmit the signals to the game server after processing those signals. After that, the server sends every user's result to all the players.

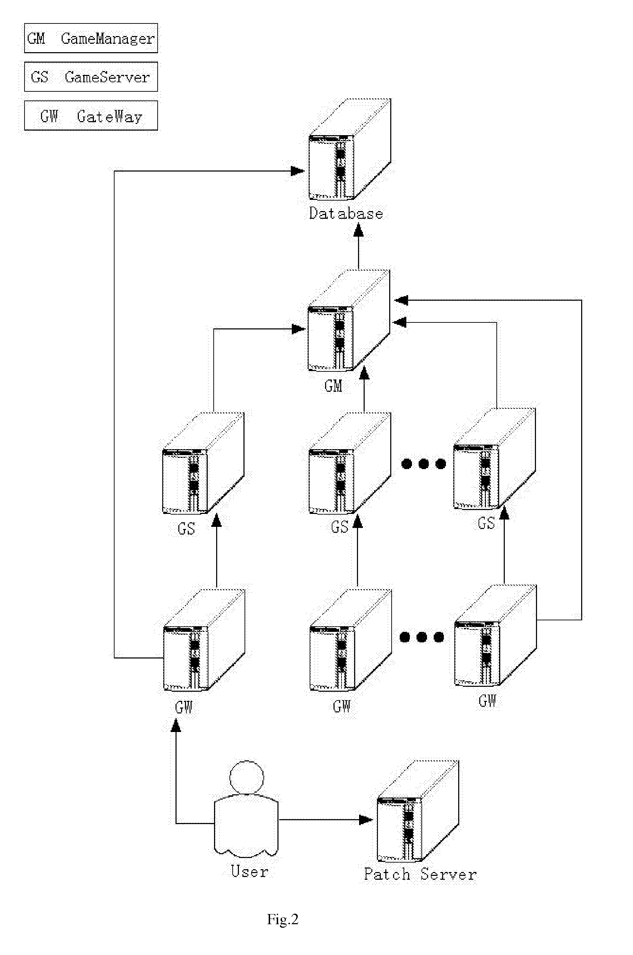

A network game server comprises the game database, the system logic module, the system management module, the system patch module, and the system gateway module as shown in Figure 2. In this embodiment, the patch server (PS) with patch modules, the gateway servers (GW) with gateway modules, the game servers (GS) with system logic modules and system communication modules, the game management servers (GM) with system managing modules, the database servers with game database modules are respectively set up. The Game Service Provider (GSP) will determine the amount of servers according to the users' quantity, and add the servers according to the growth of the users. When the game starts, the user's terminal connects to the system patch server first to check the latest game version. The terminal will download all the patch files provided by the PS, supposing that the terminal version is older than the one in the patch server; after that the terminal will set up a TCP connection with the system gateway module and verify the password according to the database; and then maintain this TCP connection for the game data transmission. The system gateway module distributes the connection requests and operation commands received from the user terminals, and transmit them to the system logic module for processing; the system logic module collects each user's game data, transmits them to other players according to the protocols; meanwhile, the system management module distributes the web resource and the game channel.

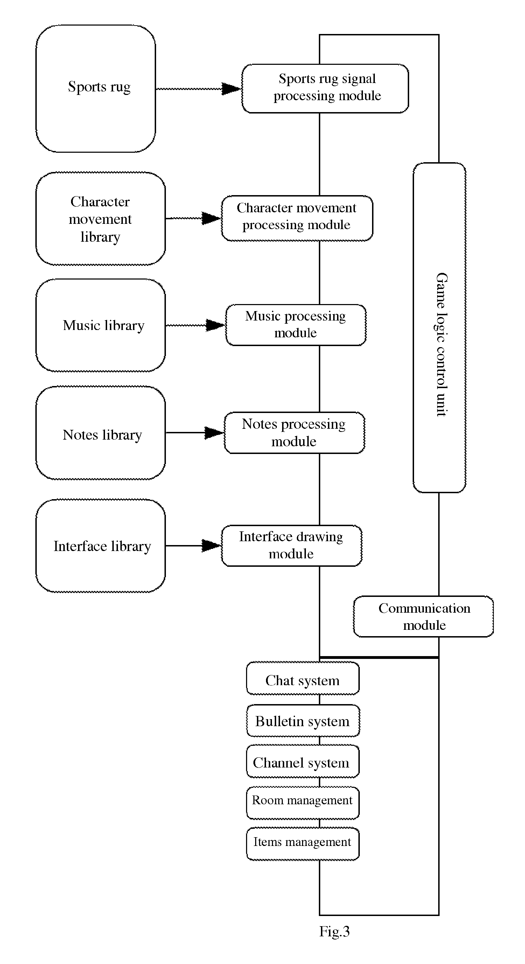

As shown in Figure 3, the user's terminal module comprises the communication module, the sports rug signal processing module, the interface drawing module, the logic control unit, the character movement processing module, the music processing module, the notes processing module, the chat system, the bulletin system, the channel system, the room management module, and the item management module. When the terminal user starts the game, the interface drawing module will load the interactive data between users and machine from the interface library, design the interface and display them on the terminal. After the user selects music in different difficulty level, the music processing module transfers the music from the music library and plays. The notes processing module loads the corresponding notes from the library according to the music, and displays them on the interface of user's terminal. Meanwhile, the player may dance on the sports rug following the music beat and notes on the screen. The character movement processing module loads the movement data form the character movement library according to the performance of players' step on beat, and displays them on the interface of user's terminal. The sports rug signal processing module transforms the signals received from sports rug into logic signals and transmits them to network sports servers via the communication module. At the same time, the notes processing module evaluates the performance of every player, for example his score and rank, etc, by comparing with the logic step signals received from the sports rugs signal processing module. In the whole process, the logic control unit manages the status of game and processes the data in the communication module, the sports rug signal processing module and the interface building module. The chat system is a module that processes the message communication between the players. The users can use this system for instant chatting in the dialog window of the interface. After someone leaves a message in the dialog window, other users can see the message and reply it immediately. The bulletin system is used for the Game Operator Announcement, by which the players get the news and information of the game. The channel system manages and maintains the status of game channels, lets the users know all the accessible channels and current status of the channels, so that the user may choose the corresponding channels. The room management module manages and maintains the status of the rooms in the game channel, informs the users of the amount of the participants and the game status in each room. The users may create a new game room or join one room according to the system hint. The item management module mainly manages the costumes of characters, the status of individual items, by which the users can manage their own costumes, items or buy a new one.

In one embodiment of this invention, the flow of the system data shows as followed:
1. The user terminal sends a message of the current user's sports score to the system gateway server.
2. The system gateway server forwards the sports score message to the system logic server.
3. After the system logic server receives the message, and forwards it to other players in the game room via the system gateway server.
4. The system logic server also maintains the rank table of the players in the same game room, if the rank changes according to players' game scores, the system logic server will forward this news to all the players in the room through the system gateway server.

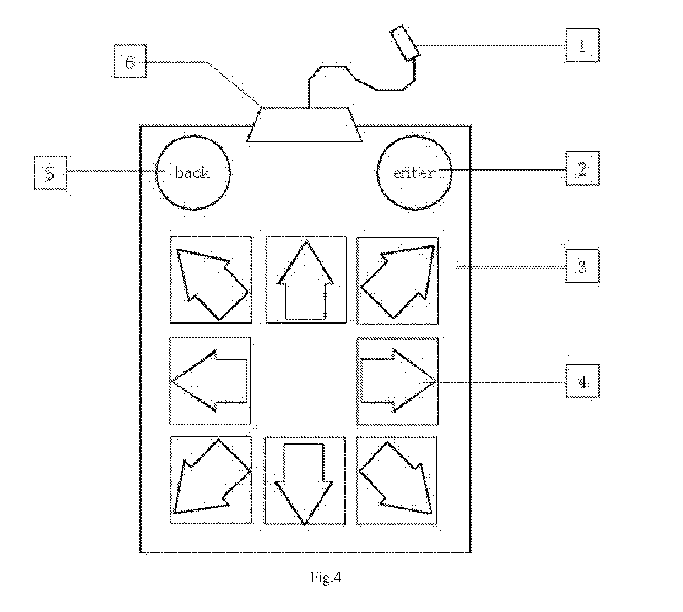

As shown in Figure 4, the network sports rug comprises following components: USB (Universal Serial Bus) port 1, enter button 2, LED lights 3, direction pedals 4, return button 5, and control IC 6. The USB port 1 connects to the user terminal (PC). There are eight direction pedals 4: up, down, left, right, up left, bottom left, up right, bottom right. There are twenty LED lights around the direction pedals 4 (four sides in total, five lights each side). All LED lights 3 are controlled by the control IC 6, and flash according to the user's step on the rug. The sports rug also may be connected to the user's terminal by other methods, for example, connected with user terminal by parallel port.

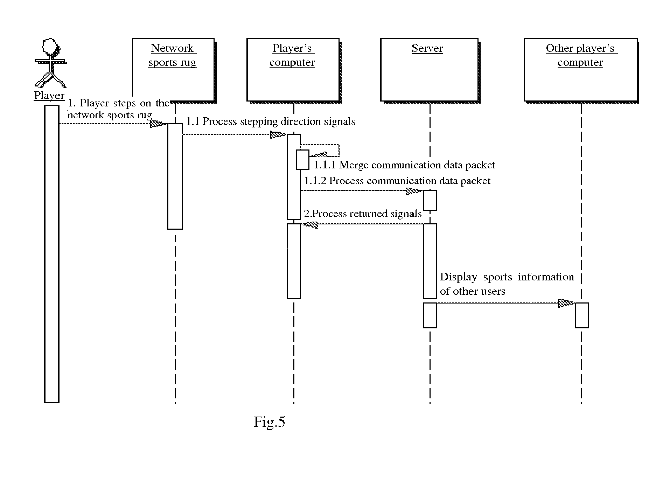

As shown in Figure 5, the signals are generated when the user steps on the network sports rug, then the signals are sent to the user terminal (PC) through USB port, the computer merges the direction signals to communication data packets, and sends them to the network sports game server via the internet; the network sports game server processes the data packets received from the user's terminal, and returns the processing result to the user terminal; the user terminal receives and processes the result; other players in this game may receive the returned signals from the network sports game server and achieve the interaction between different players.

Another embodiment of this invention is to connect with a running rug. When the terminal user starts the game, the interface drawing module loads the interactive data between users and machine from the interface library, designs the interface and displays it on the terminal. After the user selects the music in different difficulty levels, the music processing module transfers the music from the music library and plays them. The notes processing module loads the corresponding notes from library according to the selected music and displays them on the user terminal's interface. Meanwhile, the player may run on the sports rug according to the music beat and notes. The character movement processing module loads the movement data from the character movement library and displays them on the screen according to the frequency of the players' steps. The sports rug signal processing module transforms the signals received from sports rug to logic signals and transmits them to network sports game server through the communication module. At the same time, the notes processing module evaluates the performance of the player by comparing the logic step signals received from the sports rugs signal processing module. In the whole process, the logic control unit manages the status of game, processes the data in the communication module, the sports rug signal processing module and the interface drawing module. While other players joining the game may receive the returned signals from the network sports game server and achieve the interaction between different players. The users also may use the chat system, the bulletin system, the room management system and the item management system provided by the game system.

## Claims

1. A network sports system comprises network sports game servers, many user terminals connected with the servers via internet, and network sports rugs linked to each terminal,
said network sports game server comprises:
a system logic module managing sporting status of each terminal,
a game management module distributing web resources;
said user terminal comprises:
a communication module proceeding communication between the user terminals and the network sports game servers,
a sports rug signal processing module collecting signals from the sports rugs and transforming them into various logic signals,
an interface building module loading interactive data between user and computer from interface database, and designing interface, and
displaying them on the user's terminal,
a logic control cell processing the data in the communication module,
the sports rug signal processing module and the interface drawing module for game status control,
a game database module saving game data.

2. The network sports system according to claim 1, said network sports game server further comprises a system patch module, which checks game version of user's terminal and provides download of all updated files.

3. The network sports system according to claim 2, said network sports game server further comprises a system gateway module, which receives connection requests and operation commands from user's terminals and transmits them to the game server for processing.

4. The network sports system according to claim 3, said game management module, the game database module, the system patch module and the system gateway module are respectively installed in different network sports game servers.

5. The network sports system according to claim 1, said user's terminal further comprises a character movement processing module, which loads movement data from character movement library according to player's performance and display them on user terminal's interface.

6. The network sports system according to claim 1, said user's terminal further comprises a music processing module, which loads music selected by the user terminals from music library and plays them for the user.

7. The network sports system according to claim 1, said user's terminal further comprises a note processing module, which loads notes from the notes library according to the selected music, displays them on the terminal's interface and scores each player by comparing the logic step signals received from the sports rug signal processing module.

8. The network sports system according to claim 1, said network sports rug connects to the user's terminal by an USB port.

9. The network sports system according to claim 1 to 8, said network sports rug is a network dancing rug.

10. The network sports system according to claim 1 to 8, said network sports rug is a network running rug.

11. The network sports system according to claim 9, comprises a chat system.

12. The network sports system according to claim 9, comprises a bulletin system.

13. The network sports system according to claim 9, comprises a channel system.

14. The network sports system according to claim 9, comprises a room managing module.

15. The network sports system according to claim 9, comprises an item management module.
